# EUROPEAN PATENT SPECIFICATION

(11) **EP 1 724 143 B1**
(45) Date of publication and mention of the grant of the patent: **13.04.2011**
(21) Application number: 05425350.5
(22) Date of filing: 20.05.2005
(51) Int. Cl.: B60K 15/04, B23K 26/28

(54) **A method for the fabrication of a filler neck for a fuel tank, and corresponding equipment**
Ein Verfahren zur Herstellung eines Füllstutzens für einen Treibstofftank, und seiner zugehörenden Vorrichtung
Une méthode de fabrication de tubulure de remplissage pour un réservoir de carburant, est équipement associé

(43) Date of publication of application: 22.11.2006
(73) Proprietor: DYTECH - Dynamic Fluid Technologies S.p.A., 10123 Torino (IT)
(72) Inventor: Cantello, Maichi, 10011 Aglie' (IT)
(74) Representative: Jorio, Paolo

(56) References cited:
- US-A- 5 735 322
- US-A1- 2002 190 065

## Description

### TECHNICAL SECTOR

The present invention relates to a method for the fabrication of a filler neck for a fuel tank of a motor vehicle. US 2002/0190065 A discloses such a method.

### STATE OF THE PRIOR ART

As is known, filler necks for fuel tanks are prevalently made of plastic material, since plastic materials have become available that are able to meet up to the technical requirements necessary for this application (resistance to chemical aggression of fuels, mechanical resistance, etc.). Technologies for moulding of plastic materials moreover enable complex geometries to be obtained easily and the various components to be welded conveniently together.

In the last few years, however, there has been a return by some automobile manufacturers to the use of filler necks made of metal, and in particular stainless steel, the aim being to ensure maximum mechanical resistance in the case of impact and, at the same time, maximum chemical resistance to the aggression of fuel, thus obtaining filler necks that are safe and reliable over time.

The use of steel, and in particular stainless steel, poses, however, technological problems both as far as the geometries that can be obtained are concerned and as far as welding of the various components together is concerned.

In particular, a filler neck typically comprises an inlet filler designed to receive the delivery gun of a refuelling system, a main pipe connected to the filler in a leak-proof way and designed to be connected to the tank in a leak-proof way, and a breather pipe for the fuel vapours, connected so that it branches off from the main pipe and designed to be connected, in use, to a breather port of a device for recovery of the vapours. In the case where said components are made of metal, and in particular of stainless steel, it is known to connect them together by means of brazing. This technique, however, presents drawbacks both from the standpoint of mechanical resistance and reliability, which are not sufficient to meet the most stringent specifications of automobile manufacturers, and from the standpoint of costs, given that in fact the cost of the weld material is very high.

### OBJECT OF THE INVENTION

The aim of the present invention is to define a method for the fabrication of a filler neck of the type briefly described above, and in particular for welding the filler to the main pipe, that will be free from the drawbacks connected to the known methods.

The above aim is achieved by a welding method according to Claim 1.

The present invention likewise relates to equipment for the implementation of the aforesaid method according to Claim 8.

### BRIEF DESCRIPTION OF THE DRAWINGS

For a better understanding of the present invention described in what follows is a preferred embodiment, provided by way of non-limiting example and with reference to the attached drawings, wherein:
- Figure 1 is a schematic cross-sectional view of equipment implementing the method according to the present invention;

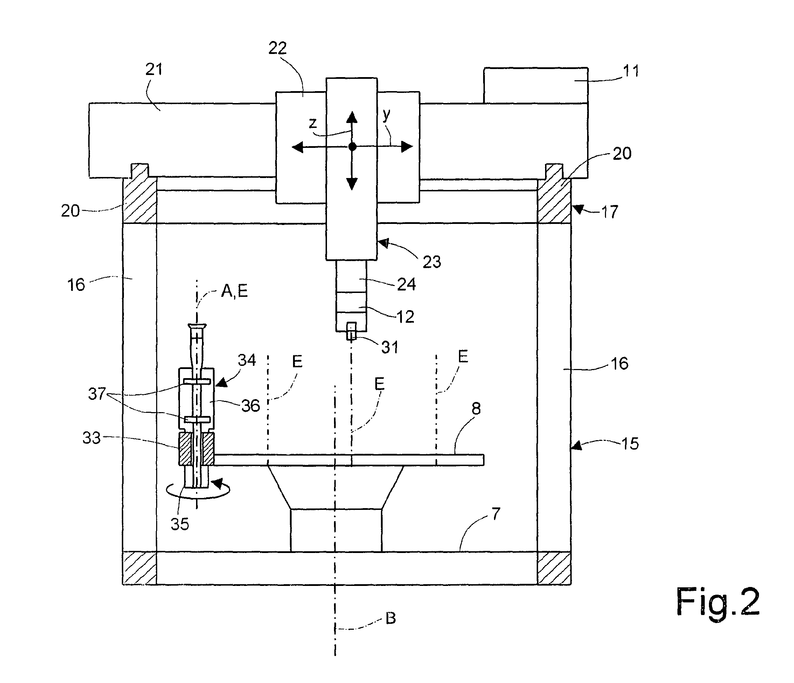

- Figure 2 is a schematic cross-sectional view according to the line of section II-II of Figure 1;
- Figures 3 and 4 are respective side views, not in scale, of some items of the equipment of Figure 1.

### PREFERRED EMBODIMENT OF THE INVENTION

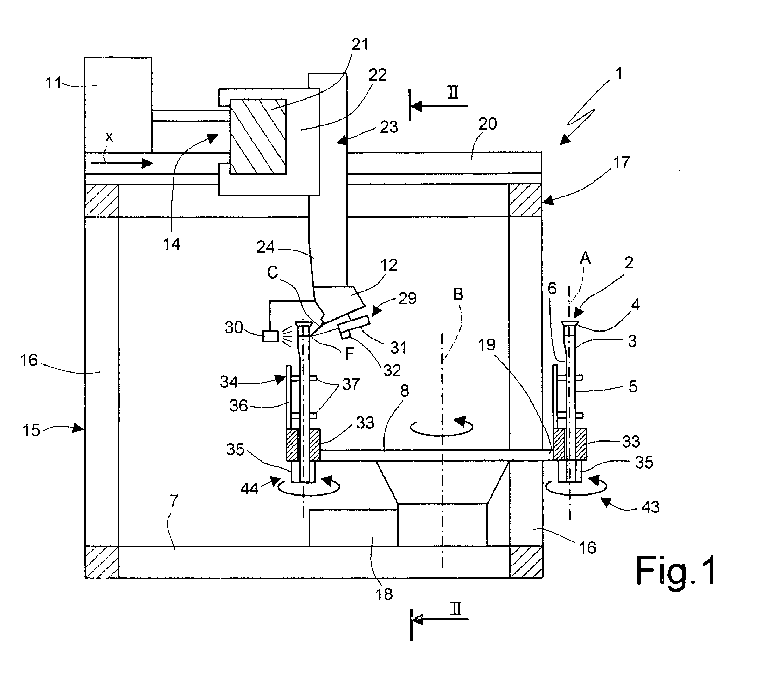

Represented by the reference number 1 in Figure 1 is equipment for welding the filler neck 2 of a fuel tank. The filler neck 2 comprises a cylindrical end portion 3 having an axis A and a filler 4 that is welded to the end portion 3 using the equipment 1 and is designed to house a delivery gun of a refuelling system (not illustrated). In addition, the filler neck 2 comprises a pipe 5 having a diameter smaller than that of the end portion 3 and a radiusing portion 6 set between the pipe 5 and the end portion 3.

The components of the filler neck 2 are conveniently made of stainless steel.

The equipment 1 basically comprises: a horizontal base 7; a rotary table 8 supported on the base 7 in such a way that it can rotate about a vertical axis B; a laser generator 11 of the CO₂ type; a focusing head 12 connected to the laser generator 11 via reflection optics of a conventional type (not illustrated); and a movement unit 14 designed to displace the focusing head 12 with respect to the rotary table 8 according to a plurality of co-ordinated axes, as will be described more fully in what follows.

The equipment 1 further comprises a frame 15 fixed on the base 7, which supports the laser generator 11 and the movement unit 14.

In particular, the frame 15 comprises a multiplicity of vertical uprights 16 arranged at the sharp edges of the base 7 and a meshlike superstructure 17 supported by the uprights 16, on which the generator 11 is mounted according to a non-limiting configuration. The rotary table 8 is set adjacent to a motor 18 for its own movement and projects with a portion 19 thereof on the outside of the frame 15, beyond a vertical plane defined by two adjacent uprights 16.

The superstructure 17 comprises a pair of guides 20 parallel to one another and to a first horizontal axis X.

In particular, the movement unit 14 comprises: a rectilinear bridge 21, which is mobile along the guides 18; a carriage 22, which is mobile in a direction Y defined by the bridge 21 perpendicular to the direction X; and a vertical arm 23, which is supported by the carriage 22 in a mobile way in a vertical direction Z and comprises an end portion 24 facing the rotary table 8 and carrying the focusing head 12.

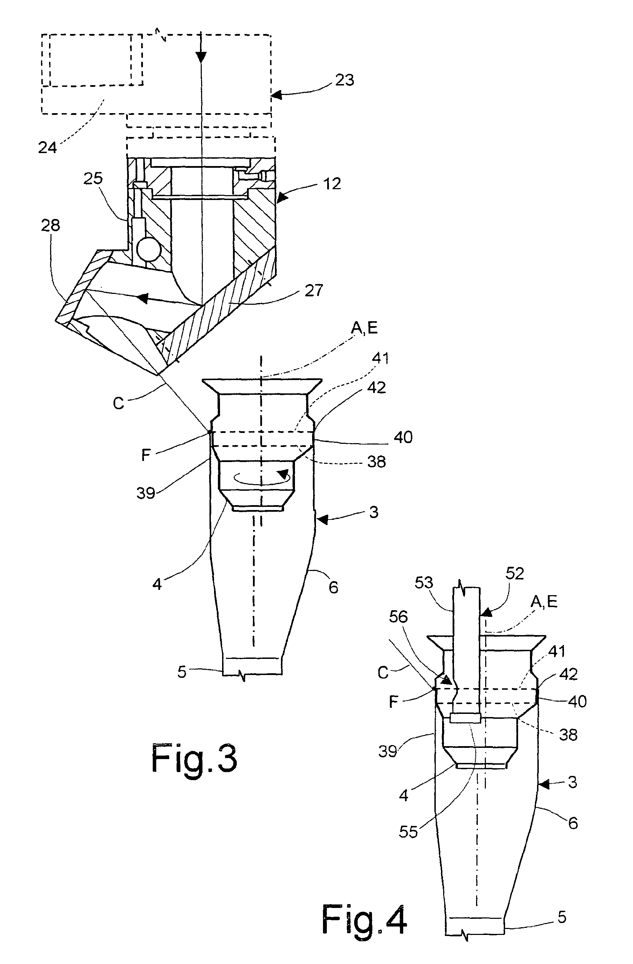

Represented in detail in Figure 3 is the focusing head 15, which comprises an outer casing 25, a reflecting mirror 27 transverse to the axis Z and a parabolic mirror 28 set laterally with respect to the reflecting mirror 27 to focus in the focus F thereof a rectilinear beam of laser light coming from the laser generator 11 through the reflection optics, the casing 25 and the reflecting mirror 27.

In particular, the parabolic mirror 28 is able to focus the laser light in a focal spot within which is comprised the geometrical point defined by the focus F.

In addition, the focused beam of light has a substantially conical geometry having an axis of symmetry C passing through the focus F, and the reflecting mirror 27 and parabolic mirror 28 are arranged so that the axis C is inclined by approximately 40° with respect to a horizontal axis.

In addition, the head 15 comprises optical detection means 29 for determining the position of the weld to be made.

In particular, the detection means 29 are supported by the casing 25 and comprise a source of light 30 for emitting diffused light on the filler neck 2, and a video camera 31, connected to a central processing unit and facing at a calibrated distance from the focus F on the opposite side of the source 30 with respect to the filler neck 2.

The detection means 29 moreover comprise a photodiode 32 capable of detecting the light emitted by the seam during the welding process and of sending a signal to the central processing unit.

The focusing head 12 executes the weld, preferably keeping the focus F in a fixed position whilst the filler neck 2 is set in rotation via a spindle 33 supported by the rotary table 8.

In particular, the rotary table 8 supports two sets of spindles 33, for example made up of four spindles each, facing the focusing head 15 and set at equal distances apart in respective parallel rows symmetrical with respect to the axis B.

Each spindle 33 turns about an axis E parallel to the axis B and supports a gripping assembly 34, which clamps a filler neck 2 so that the axis A of the end portion 3 coincides with the axis E of rotation of the spindle 33.

For this purpose, each spindle 33 is hollow to enable housing of a portion of the pipe 5 extending underneath the rotary table 8 and has a detent 35 coming out in the direction of the horizontal base 7 and defining a reference for the axial position of the filler neck 2.

Each gripping assembly 34 is connected to the respective spindle 33 on the opposite side of the respective detent 35 with respect to the rotary table 8 and comprises a vertical rectangular plate 36 set at a horizontal distance from the respective axis E.

Each rectangular plate 36 is provided with a multiplicity of clamping elements 37, preferably pneumatic ones, which cooperate with the pipe 5 of the filler neck 2.

The filler 4 is connected to the end portion 3 via a through weld 38 made circumferentially between a side wall 39 of the end portion 3 and a cylindrical wall 40 of the filler 4 which is housed within the side wall 39. The filler neck 2 moreover has a lap weld 41 made circumferentially between an axial edge 42 of the cylindrical wall 40 and the side wall 39.

To obtain said welds, it is preferable to position the focus F, respectively, on an outer surface of the side wall 39 and on the internal sharp edge of the axial edge 42. Consequently, the focus F is horizontally set at a distance from the axis E of each spindle 33 by an amount equal to the outer radius of the end portion 3 and, respectively, by an amount equal to the inner radius of the end portion 3 so that the focus F can follow, for each weld, the entire path to be welded during a complete revolution of the gripping assemblies 34.

Operation of the equipment 1 is described in what follows.

Before being mounted on the rotary table 8, the filler necks 2 are pre-assembled in a step of preparation, during which the filler 4 is mounted with radial interference on the end portion 3. The axial position of the filler 4 can be conveniently defined by the fact that it axially bears upon a reference projection (not shown) protruding radially within the side wall 39.

Next, after unloading of the gripping assemblies 34 from the filler necks 2 of the previous cycle, the filler necks 2 that are still to be welded are inserted in the respective spindles 33 until they reach the detent 35, and the pipe 5 is closed on the rectangular plate 36 via the clamping elements 37. Said operation is carried out in a loading/unloading station 43 of the equipment 1 defined in a position corresponding to the protruding portion 13 of the rotary table 8.

After the filler necks 2 have been loaded on the gripping assemblies 34, the rotary table 4 performs a rotation through 180° and carries the filler necks 2 themselves into a workstation 44, in which the through welds 38 and a lap weld 41 are made.

In particular, in the workstation 44, the focusing head 15 performs a step of approach descending onto the end portion 3 to a vertical position, which is the same for each filler neck 2. Next, there is envisaged a step of detection of the position of the axial edge 42 via the detection means 29.

In particular, the source of light 30 illuminates the end portion 3 and the filler 4, projecting on the video camera a shadow presenting a step in a position corresponding to the axial edge 42. The image in transparency thus obtained of the profile is processed by the CPU, which identifies the co-ordinates of the step and is thus able to govern fine positioning of the focus F. Preferably, during the step of detection, the spindle 33 is in rotation, so enabling to the CPU to acquire a large number of points, which are numerically interpolated to obtain a continuous profile having known spatial co-ordinates.

Next, a first welding step starts, in which the focusing head 15 is moved so that the focus F is set on the outer surface of the end portion 3 at a vertical distance assigned according to the design with respect to the axial edge 42 so as to make the through weld 38 continuously whilst the spindle 33 is rotating to reach a welding speed ranging indicatively between 3 and 5 m/min. Next, the second welding step starts, in which the focusing head 15 positions the focus F at the height of the axial edge 42 on the internal sharp edge thereof, and a lap weld 41 is carried out continuously whilst the spindle 33 is in rotation, reaching welding speeds similar to the previous ones.

During the welding step, the photodiode 32 enables control of the process, for example warning the CPU of possible flashes of light, caused, for example, by the presence of impurities in excess that can diminish the mechanical characteristics of the weld seam.

After completion of the step of welding of a filler neck 2, the focusing head 15 is displaced along the axis Y into a position corresponding to the next filler necks 2 and repeats the steps previously described starting from the step of approach.

When the step of welding of the fourth filler neck is completed, the focusing head 15 is raised, and the rotary table 4 performs a further rotation through 180° to bring the finished pieces back into the loading/unloading station 43 for being unloaded and to enable loading of new pieces.

Consequently, the waiting times in the loading/unloading station 43 are the sum of the time for unloading of the finished filler necks 2 in the previous cycle and of the time for loading of the filler necks 2 of the next cycle.

The welding step, has a duration much shorter than the waiting time in the loading and unloading station. The remaining time is exploited, without increasing the overall cycle time, for the step of detection of the position, performing a complete revolution of the filler neck 2. It is moreover possible to insert further optional steps, such as a step of optical control following upon the second welding step, and a step of cleaning prior to the first welding step.

The advantages of the equipment 1 are described in what follows.

The use of a laser machine enables welds of excellent quality to be obtained at contained prices in the case of mass production. In addition, the welding time is much shorter than the time of loading/unloading; consequently, it is possible to insert steps of optimal recording and control of the process, which reduce the number of rejects and the production costs, at the same time guaranteeing a high quality.

The laser welding, which is of an autogenous type, enables avoidance of the use of costly weld materials and guarantees an accurate reproducibility of the penetration and of the width of the weld seam. Since application of heat is limited, the mechanical and metallurgical properties of the components are preserved, and the geometrical distortions are reduced. Since it is a contactless welding process, the equipment for supporting the pieces can be reduced to a minimum.

In addition, by rotating the filler neck and keeping the focusing head 15 stationary during the welding step, the inertia of the moving parts is reduced, with advantages in terms of controls, precision of the position of the focus and simplicity of the structure of the focusing head.

The execution of a lap weld enables closing of the gap between the end portion 3 and the filler 4, eliminating any possibility of deposit of moisture and dirt that might favour processes of corrosion.

Finally, it is clear that modifications and variations can be made to the method and to the corresponding equipment described and illustrated herein, without thereby departing from the sphere of protection of the present invention, as defined in the annexed claims.

For example, it is possible to envisage (Figure 4) a shielding element 52 designed to be inserted into the end portion 3 to prevent any deposit of particles projected within the filler neck 2 during execution of the through weld 38.

In particular, the shielding element 52 has a tubular body 53 having an end portion rigidly connected to the focusing head 15 in a direction parallel to the axis Z and an end plug 55 on the opposite side with respect to the focusing head 15.

In addition, the tubular body 53 has a side opening 56 having a substantially longitudinal extension and set at a distance from the focus F to enable insertion of the end portion 3.

Furthermore, during the welding step it is possible to use covering gas, for example helium on the external surface of the end portion 3 and argon within the portion 3 itself, preferably conveyed via the shielding element 52.

In addition, it is possible to envisage an alternative configuration of the equipment 1 having a further station, for example a station for intermediate cleaning between the initial station 43 and the workstation 44 for cleaning the surface to be welded prior to the welding step.

Alternatively, it is possible to use a laser generator of the Nd:YAG type, conveyed via optical fibres or to modify the angle of the axis C, adopting for example a value of 90° with respect to the axis Z.

Furthermore, it is possible to envisage a dual configuration, in which the filler neck 2 remains stationary during the welding step and the focusing head 12 can turn about the axis Z via known movement means, keeping, instant by instant, the axis C of the laser beam in a plane lying simultaneously also on the axis A.

## Claims

1. A method of fabrication of a filler neck (2) for a fuel tank, comprising: a metal end portion (3) having a first side wall (39) defining an outer surface and a longitudinal axis (A); and a filler (4) comprising a second metal side wall (40) housed in said end portion (3) and designed to house refuelling means, said method being **characterized in that** it comprises a first welding step, in which a focussing head (15) is moved so that the focus (F) of a laser beam is set on said outer surface and said end portion (3) is rigidly connected to said filler (4) with a laser weld (38) made circumferentially between and passing through said first and second side walls (39, 40).

2. The method according to Claim 1, **characterized in that** it comprises a second step of laser welding for making a second weld (41) designed to connect said second side wall (40) of said filler (4) rigidly to said first side wall (39) of said end portion (3).

3. The method according to Claim 2, **characterized in that** said second welding step is one of lap welding between an axial end edge (42) of said first side wall (39) and said second side wall (40).

4. The method according to Claim 3, **characterized in that** it comprises a step of detection of the position of said end edge (42).

5. The method according to any one of the preceding claims, **characterized in that** said at least one welding step is carried out, rotating said filler neck (2), by a focusing head (12) kept fixed.

6. The method according to any one of Claims 1 to 4, **characterized in that** said at least one welding step is carried out, keeping said filler neck (2) fixed, by a focusing head (12) moved around said filler neck (2).

## Patentansprüche

1. Verfahren zur Herstellung eines Füllstutzens (2) für einen Treibstofftank, umfassend: einen Endabschnitt (3) aus Metall, der eine erste Seitenwand (39), die eine Außenfläche definiert, und eine Längsachse (A) aufweist; und eine Einfüllvorrichtung (4), die eine zweite Seitenwand (40) aus Metall umfasst, die in dem Endabschnitt (3) untergebracht ist, und dafür vorgesehen ist, Betankungsmittel aufzunehmen; wobei das Verfahren **dadurch gekennzeichnet ist, dass** es einen ersten Schweißschritt umfasst, bei dem ein Fokussierkopf (15) derart bewegt wird, dass der Fokus (F) eines Laserstrahls auf die Außenfläche gerichtet ist, und der Endabschnitt (3) mit einer Laserschweißnaht (38), die umlaufend zwischen der ersten und zweiten Seitenwand (39, 40) hergestellt ist und durch sie hindurch verläuft, starr mit der Einfüllvorrichtung (4) verbunden wird.

2. Verfahren nach Anspruch 1, **dadurch gekennzeichnet, dass** es einen zweiten Laserschweißschritt zur Herstellung einer zweiten Schweißnaht (41) umfasst, die dafür bestimmt ist, die zweite Seitenwand (40) der Einfüllvorrichtung (4) starr mit der ersten Seitenwand (39) des Endabschnitts (3) zu verbinden.

3. Verfahren nach Anspruch 2, **dadurch gekennzeichnet, dass** der zweite Schweißschritt ein Schritt zum Überlappschweißen zwischen einer axialen Endkante (42) der ersten Seitenwand (39) und der zweiten Seitenwand (40) ist.

4. Verfahren nach Anspruch 3, **dadurch gekennzeichnet, dass** es einen Schritt des Erfassens der Position der Endkante (42) umfasst.

5. Verfahren nach einem der vorhergehenden Ansprüche, **dadurch gekennzeichnet, dass** der mindestens eine Schweißschritt von einem Fokussierkopf (12) ausgeführt wird, der feststeht, wobei der Füllstutzen (2) gedreht wird.

6. Verfahren nach einem der Ansprüche 1 bis 4, **dadurch gekennzeichnet, dass** der mindestens eine Schweißschritt von dem Fokussierkopf (12) ausgeführt wird, der um den Füllstutzen (2) herum bewegt wird, wobei der Füllstutzen (2) feststeht.

## Revendications

1. Procédé de fabrication d'un goulot de remplissage (2) destiné à un réservoir de carburant, comprenant : une partie d'extrémité métallique (3) ayant une première paroi latérale (39) définissant une surface extérieure et un axe longitudinal (A), et un dispositif de remplissage (4) comprenant une deuxième paroi latérale métallique (40) logée dans ladite partie d'extrémité (3) et conçue ou réalisée pour loger un moyen de ravitaillement en carburant, ledit procédé étant **caractérisé en ce qu'**il comprend une première étape de soudage, où une tête de focalisation (15) est déplacée de telle sorte que le foyer (F) d'un faisceau laser est positionné sur ladite surface extérieure et ladite partie d'extrémité (3) est reliée fermement audit dispositif de remplissage (4) par l'intermédiaire d'une soudure au laser (38) réalisée sur la circonférence entre lesdites première et deuxième parois latérales (39, 40) et traversant celles-ci.

2. Procédé selon la revendication 1, **caractérisé en ce qu'**il comprend une deuxième étape de soudage au laser destinée à réaliser une deuxième soudure (41) conçue ou réalisée pour relier ladite deuxième paroi latérale (40) dudit dispositif de remplissage (4) fermement à ladite première paroi latérale (39) de ladite partie d'extrémité (3).

3. Procédé selon la revendication 2, **caractérisé en ce que** ladite deuxième étape de soudage est une étape de soudage par recouvrement entre un bord d'extrémité axial (42) de ladite première paroi latérale (39) et ladite deuxième paroi latérale (40).

4. Procédé selon la revendication 3, **caractérisé en ce qu'**il comprend une étape de détection de la position dudit bord d'extrémité (42).

5. Procédé selon l'une quelconque des revendications précédentes, **caractérisé en ce que** ladite au moins une étape de soudage est exécutée, en faisant tourner ledit goulot de remplissage (2), par une tête de focalisation (12) maintenue fixe.

6. Procédé selon l'une quelconque des revendications 1 à 4, **caractérisé en ce que** ladite au moins une étape de soudage est réalisée, en maintenant ledit goulot de remplissage (2) fixe, par une tête de focalisation (12) déplacée autour dudit goulot de remplissage (2).
